# EUROPEAN PATENT SPECIFICATION

(11) **EP 2 434 696 B1**
(45) Date of publication and mention of the grant of the patent: **19.04.2017**
(21) Application number: 10179270.3
(22) Date of filing: 24.09.2010
(51) Int. Cl.: H04L 12/46, H04W 76/04

(54) **SYSTEM AND METHOD FOR ENABLING VPN TUNNEL STATUS CHECKING**
System und Verfahren zur Ermöglichung der VPN-Tunnelstatusprüfung
Système et procédé pour activer une vérification d'état de tunnel vpn

(43) Date of publication of application: 28.03.2012
(73) Proprietor: BlackBerry Limited, Waterloo, ON N2K 0A7 (CA)
(72) Inventor: Son, Giyeong, Waterloo, Ontario N2L 5Z5 (CA); Tse, Chi Chiu, Mississauga, Ontario L4W 0B5 (CA); Fedotenko, Denis, Waterloo, Ontario N2L 5Z5 (CA)
(74) Representative: Moore, Barry

(56) References cited:
- US-B1- 6 668 282

## Description

The present disclosure relates to virtual private networks (VPN) and in particular to VPN tunnel state checking.

### BACKGROUND

A virtual private network is a network that uses a public telecommunication infrastructure such as the Internet to create a secure virtual connection between two or more entities for communication. This is accomplished through the use of a "tunnel" between the two or more entities. A VPN may utilize various protocols to establish the tunnel and to secure communications between the sender and recipient. For example, one protocol is Internet Protocol Security (IPsec). In this protocol, each IP packet of a data stream is authenticated and encrypted and the protocol is used to protect data flows on the virtual private network.

Various events can cause a tunnel to become inactive and thus a VPN tunnel state needs to be checked periodically during an idle time. A handheld or mobile device utilizes a special VPN liveness check mechanism called dead peer detection (DPD). A DPD-based liveness check is performed by the VPN components on the client and the server. Such DPD activity is described in the Internet Engineering Task Force (IETF) request for comments (RFC) 3706, the contents of which are incorporated herein by reference. The document describes a method for detecting a dead Internet Key Exchange (IKE) peer. DPD utilizes IPsec traffic patterns to minimize the number of IKE messages that are needed to confirm liveness. The VPN client in a handheld initiates or requests a VPN liveness check when the VPN tunnel is in an idle state.

However, in some cases, VPN clients or servers do not support a DPD based liveness check. In other cases, a client or server may disable the DPD liveness check feature. If this is these situations, there may be no way to check that the VPN tunnel is still alive during an idle time. The VPN tunnel being down creates a situation where there is no service to the device, leading to delays in communication.

US Patent No. 6,668,282 B1 describes a method and system for monitoring the status of an active secure tunnel between a pair of network elements in a communications network. The first network element originates and transmits an IPSec test message to a second network element. The number of times that second network element fails to return a response to an IPSec test message is accumulated during a predetermined time interval and then compared with a threshold value to determine if the active secure tunnel has become disabled

### SUMMARY

The present disclosure provides a method at a mobile device in accordance with claims 1, 12 and 13.

In one embodiment, the server is a domain name server and the request is a domain name server PTR request. In one embodiment, the request utilizes a domain name server client component of the mobile device. In one embodiment the domain name server client component includes application program interfaces for handling the request and response.

In a further embodiment, the time interval is increased upon resending the request. In one embodiment the request count is four, and the time interval is two seconds for a first request, two seconds for a second request, four seconds for a third request and eight seconds for a fourth request.

In a further embodiment, the timer expires if the VPN tunnel is in an idle state and no traffic occurs for a preset duration. In one embodiment the timer is reset if a relay client protocol ping timer expires.

In a further embodiment, the sending of the request to the server only occurs if dead peer detection liveness checking is unavailable. In one embodiment the mobile device sets a flag indicating whether dead peer detection liveness checking is available on establishment of the VPN.

In a further embodiment the VPN client manager initiates tunnel take down or re-establishment procedures upon receipt of the inactive tunnel indication.

The present disclosure further provides a mobile device comprising: a processor; and a communications subsystem, wherein the processor and communications subsystem cooperate to: upon expiration of a timer, send, over a VPN tunnel, a request to a server located behind a terminator of the VPN; check whether a response to the request is received within a time interval; if a response to the request is received, reset the timer; and if a response to the request is not received within the time interval, resend the request if a request count is less than a set number of requests; or provide an inactivetunnel indication to a VPN client manager if the request count equals the set number of requests.

In one embodiment, the server is a domain name server and the request is a domain name server PTR request. In one embodiment the mobile device further comprises a domain name server client component configured to send the request. In one embodiment the domain name server client component includes application program interfaces for handling the request and response.

In a further embodiment, the time interval is increased upon resending the request. In one embodiment the request count is four, and the time interval is two seconds for a first request, two seconds for a second request, four seconds for a third request and eight seconds for a fourth request.

In a further embodiment, the timer expires if the VPN tunnel is in an idle state and no traffic occurs for a preset duration. In one embodiment the timer is reset if a ping timer expires.

In a further embodiment, the sending of the request to the server only occurs if dead peer detection liveness checking is unavailable. In one embodiment the mobile device further comprises a flag indicating whether dead peer detection liveness checking is available, wherein the mobile device sets the flag on establishment of the VPN.

In a further embodiment, the VPN client manager initiates tunnel take down or re-establishment procedures upon receipt of the inactive tunnel indication.

### BRIEF DESCRIPTION OF THE DRAWINGS

The present disclosure will be better understood with reference to the drawings in which:
**Figure 1** is a block diagram of an exemplary VPN tunneling architecture;
**Figure 2** is a process diagram showing use of DNS to verify VPN tunnel liveness; and
**Figure 3** is a block diagram of an exemplary mobile device.

### DETAILED DESCRIPTION

An alternative to a DPD-based VPN liveness check may be provided when DPD-based liveness check is not available. In one embodiment, the VPN tunnel state can be checked using a domain name server (DNS) in cases where no DPD-based VPN liveness check is available. The DNS component in the handheld should provide a reliable application program interface (API) to handle DNS query-based VPN keep alive checks.

In one embodiment, a DNS-based VPN liveness check that is similar to the DPD-based liveness check is provided. In this embodiment, the VPN client and server components are not involved in performing the liveness check.

A timer may be used to determine when the liveness check should occur. For example, a VPN liveness timer may expire every six minutes. If the timer expires, a handheld may initiate a DNS-based VPN liveness check. The mobile device requests a DNS client component to send a DNS PTR (resource record) request to the DNS server. As will be appreciated the DNS server is closely located behind the VPN terminator by the VPN tunnel. If the DNS client component does not receive any response within a certain timer interval, it retransmits the DNS PTR request several times to a maximum nunmber of VPN liveness checks. If the transaction fails to receive a response, the DNS client component then returns a result status of failure to the VPN tunnel management component. In this way, the VPN tunnel management component might know that the tunnel for the VPN is no longer alive.

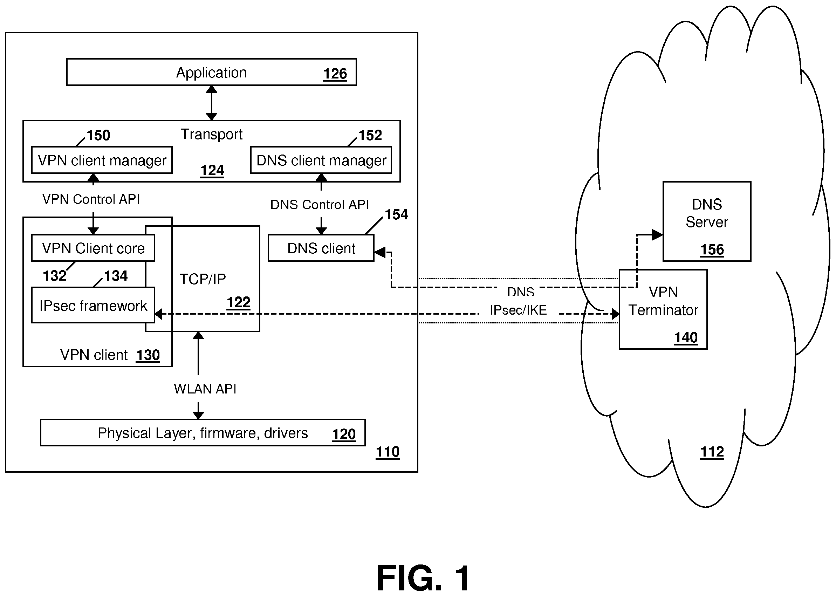

Reference is now made to **Figure 1**, which is a block diagram illustrating an exemplary VPN tunneling architecture. As will be appreciated by those skilled in the art, the embodiment of **Figure 1** is merely meant as an example and other VPN tunneling architectures could be used with the present methods and systems.

In the embodiment of **Figure 1** a mobile device **110** communicates with a corporate network **112**. Mobile device **110** may be any device capable of data communications, including but not limited to a user equipment, network enabled cellular telephone, personal digital assistant, a laptop computer, among others.

In mobile device **110**, a physical layer **120** is utilized to provide communication over a particular network. For example, in one embodiment the network may be a wireless fidelity (WiFi) network, where the physical layer **120** is used to provide communication between the handheld device and the access point (not shown). In other embodiments, a cellular network such as a global system for mobile communications (GSM), code division multiple access (CDMA), universal mobile terrestrial service (UMTS), long-term evolution (LTE), long-term evolution advanced (LTE-A), among others, may be used for data reception and transmission.

A Transmission Control Protocol /Internet Protocol (TCP/IP) layer **122** sits on top of the physical layer **120** and is used for communications.

Transport **124** provides an interface for applications **126** can further communicate through TCP/IP layer **122**. The transport **124** is, in one embodiment, the main handler to control the connections over the network, and directly interacts with underlying network components such as WiFi, VPN, TCP and DNS.

Transport **124** includes a VPN client manager **150** which is used to manage a VPN client **130** and includes a control API communicating with the VPN client core.

VPN client **130** communicates with a VPN server (not shown) on VPN terminator **140** in corporate network **112**. VPN client **130** includes a VPN client core **132** and an IPsec framework **134**. The use of such components are described, for example, in the IETF specifications for IKE and IPsec.

Transport **124** further includes a DNS client manager **152**, which is used for communicating with the domain name server **156** through a DNS client **154**. Application program interfaces may be established for DNS client **154** to allow for DNS liveness checking, as described below.

Transport **124** is also a handler for the VPN liveness check. The component initiates or requests a VPN liveness check when the VPN tunnel is in an idle state. The mobile device **110** utilizes a VPN liveness timer to initiate VPN liveness check. The timer is reset when any network traffic occurs through the VPN tunnel. Therefore, the timer only progresses when the VPN tunnel goes into an idle state.

Once the timer expires, the transport **124** performs a VPN liveness check. As indicated above, two options for VPN liveness checking are provided in the present disclosure for VPN liveness check. These are the DPD-based VPN liveness check and the DNS-based liveness check. The decision to select which method depends on the availability of the DPD-based VPN liveness check.

In particular, if the DPD-based VPN liveness check is not available the handheld utilizes DNS to check the VPN tunnel state.

The determination of whether DPD-based VPN liveness is made at the time that the VPN is established. Thus, during VPN establishment the device may request DPD capability and receive a response from the gateway. In this way a flag could be set on the device to indicate whether or not DPD-based VPN liveness check is available. The flag could be used in a check to determine which liveness check to use, and also to configure timers if there are different timer values for the different liveness checks. For example, the transport **124** maintains the liveness check timer and may use a different timer value for DNS than for DPD liveness checking.

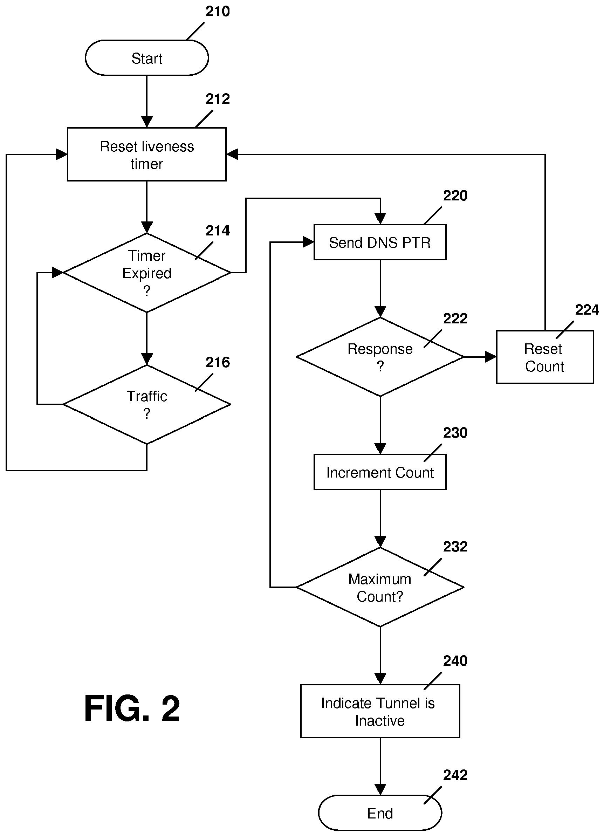

Reference is now made to **Figure 2**, which illustrates a process for a DNS liveness check. In **Figure 2** the process starts at block **210** and proceeds to block **212** in which the VPN liveness timer is reset. As will be appreciated by those in the art, the value for the timer can be predetermined. For example the value may be set by a mobile device manufacturer, carrier, or may be configured on the device. The value could be set during manufacture or provisioned to the device subsequently. In one embodiment, the value for a DNS liveness check timer may be set to six minutes. Further, the value of the timer may be set based on a flag on the device indicating whether DNS or DPD liveness checking should be used, as each may have a different value.

From block **212**, the process proceeds to block **214** in which a check is made to determine whether the timer has expired. If the timer has not expired, the process proceeds to block **216** in which check is made to determine whether traffic has occured through the VPN tunnel. In one embodiment, the check of block **216** can determine if a relay client protocol (RCP) ping timer has expired and the RCP ping sent. The RCP ping timer can have a value less than the timer of block **214**.

If no traffic has occurred, the process proceeds from block **216** back to block **214.** In this way, the process will proceed between blocks **214** and **216** until either traffic arrives or until the timer expires.

If traffic occurs, from block **216** the process proceeds back to block **212** in which the liveness timer is reset and the process then proceeds back to block **214.**

From block **214**, if the timer expires, the process proceeds to block **220**.

In block **220**, a DNS request is made. In the embodiment of **Figure 2**, the DNS request is a DNS PTR request. As will be appreciated by those skilled in the art, a DNS PTR request is a resource record request in a server asking for a domain name based on an IP address. However, the use of DNS PTR requests is not meant to be limiting, and other DNS requests could be made.

The request of block **220** is sent to DNS server **156**, which as will be appreciated by those skilled in the art is closely located behind VPN terminator **140**.

From block **220**, the process proceeds to block **222** in which a check is made to determine whether a response to the DNS PTR request of block **220** has been received from the network within a preset interval. In block **222**, if a response is received then the VPN tunnel is alive and the process proceeds to block **224** in which a counter for the number of DNS PTR requests is reset. The counter is discussed in more detail below. The process then proceeds back to block **212** in which the VPN liveness timer is reset.

In one embodiment, multiple DNS-based checks are made to determine whether or not a tunnel is active. For example, a request may be made to the network through the VPN tunnel before it is determined that the tunnel is no longer active. A counter may be maintained to keep track of the number of DNS PTR requests made.

From block **222**, if a response is not received within a predetermined timed interval, the process then proceeds to block **230** in which a count is incremented.

The process then proceeds to block **232** in which a check is made to determine whether or not the maximum count has been reached. This maximum count indicates the maximum number of DNS requests sent from the mobile device before the tunnel is deemed dead. The value is predetermined by a mobile device manufacturer, carrier, other network side entity, or may be configured on the device.

If the maximum count has not been reached, the process proceeds back to block **220** in which a further DNS PTR request is sent over the VPN tunnel.

From block **232**, if the maximum count has been reached, the process proceeds to block **240** in which the VPN tunnel is determined to be inactive and the DNS client component returns a result status failure to VPN client manager **150** within transport **124**. Transport **124** can then initiate tunnel take down or re-establishment procedures on mobile device **110**. As will be appreciated by those in the art, an inactive tunnel could be one that is dead, suspended, or unresponsive for any reason, and the present disclosure is not limited to any particular reason for inactivity in a tunnel.

From block **240**, the process proceeds to block **242** and ends.

As will be appreciated by those in the art, the interval between the successive DNS PTR messages may be varied. For example, after a DNS PTR request is sent, the delay interval for the check of block **222** may be 2 seconds. After the second DNS PTR message is sent, the delay interval that the check at block **222** waits may again be 2 seconds. After a further DNS PTR message is sent, the delay may be 4 seconds and after a fourth DNS PTR message is sent, the interval that may be waited for by the check of block **222** may be 8 seconds.

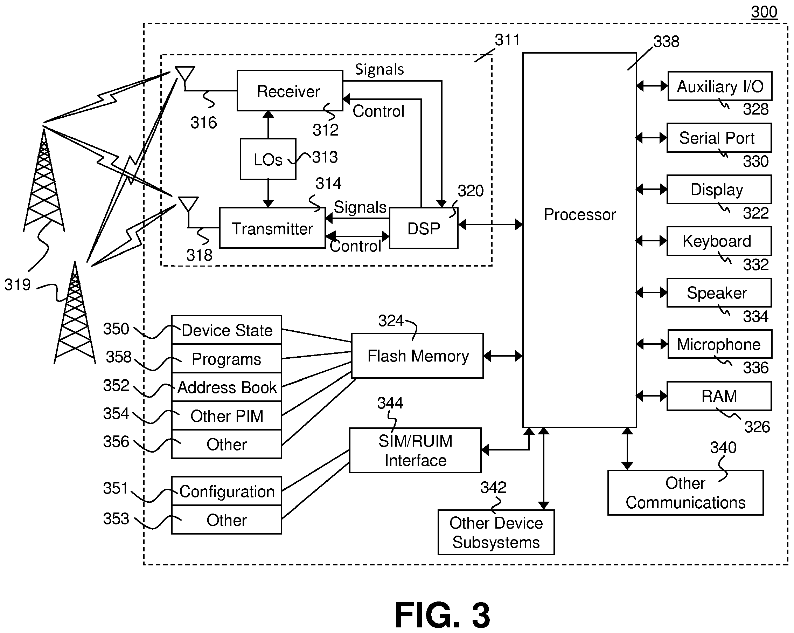

As will be appreciated, the maintaining of timers, checking liveness including sending requests and potentially receiving responses is done on processor of a mobile device, in combination with a communications subsystem of the mobile device. One such exemplary mobile device is illustrated below with reference to **Figure 3**. The mobile device of **Figure 3** is however not meant to be limiting and other mobile devices could also be used.

Mobile device **300** is typically a two-way wireless communication device having voice and data communication capabilities. Mobile device **300** generally has the capability to communicate with other computer systems on the Internet. Depending on the exact functionality provided, the mobile device may be referred to as a data messaging device, a two-way pager, a wireless e-mail device, a cellular telephone with data messaging capabilities, a wireless Internet appliance, a wireless device, a user equipment, or a data communication device, as examples.

Where mobile device **300** is enabled for two-way communication, it will incorporate a communication subsystem **311**, including both a receiver **312** and a transmitter **314**, as well as associated components such as one or more antenna elements **316** and **318**, local oscillators (LOs) **313**, and a processing module such as a digital signal processor (DSP) **320**. As will be apparent to those skilled in the field of communications, the particular design of the communication subsystem **311** will be dependent upon the communication network in which the device is intended to operate.

Network access requirements will also vary depending upon the type of network **319**. In some networks network access is associated with a subscriber or user of mobile device **300**. A mobile device may require a removable user identity module (RUIM) or a subscriber identity module (SIM) card in order to operate on a network. The SIM/RUIM interface **344** is normally similar to a card-slot into which a SIM/RUIM card can be inserted and ejected like a diskette or PCMCIA card. The SIM/RUIM card can have memory and hold many key configurations **351**, and other information **353** such as identification, and subscriber related information.

When required network registration or activation procedures have been completed, mobile device **300** may send and receive communication signals over the network **319**. As illustrated in **Figure 3**, network **319** can consist of multiple base stations communicating with the mobile device.

Signals received by antenna **316** through communication network **319** are input to receiver **312**, which may perform such common receiver functions as signal amplification, frequency down conversion, filtering, channel selection and the like, and in the example system shown in **Figure 3**, analog to digital (A/D) conversion. A/D conversion of a received signal allows more complex communication functions such as demodulation and decoding to be performed in the DSP **320**. In a similar manner, signals to be transmitted are processed, including modulation and encoding for example, by DSP **320** and input to transmitter **314** for digital to analog conversion, frequency up conversion, filtering, amplification and transmission over the communication network **319** via antenna **318**. DSP **320** not only processes communication signals, but also provides for receiver and transmitter control. For example, the gains applied to communication signals in receiver **312** and transmitter **314** may be adaptively controlled through automatic gain control algorithms implemented in DSP **320**.

Mobile device **300** generally includes a processor **338** which controls the overall operation of the device. Communication functions, including data and voice communications, are performed through communication subsystem **311**. Processor **338** also interacts with further device subsystems such as the display **322**, flash memory **324**, random access memory (RAM) **326**, auxiliary input/output (I/O) subsystems **328**, serial port **330**, one or more keyboards or keypads **332**, speaker **334**, microphone **336**, other communication subsystem **340** such as a short-range communications subsystem and any other device subsystems generally designated as **342**. Serial port **330** could include a USB port or other port known to those in the art.

Some of the subsystems shown in **Figure 3** perform communication-related functions, whereas other subsystems may provide "resident" or on-device functions. Notably, some subsystems, such as keyboard **332** and display **322**, for example, may be used for both communication-related functions, such as entering a text message for transmission over a communication network, and device-resident functions such as a calculator or task list.

Operating system software used by the processor **338** may be stored in a persistent store such as flash memory **324**, which may instead be a read-only memory (ROM) or similar storage element (not shown). Those skilled in the art will appreciate that the operating system, specific device applications, or parts thereof, may be temporarily loaded into a volatile memory such as RAM **326**. Received communication signals may also be stored in RAM **326**.

As shown, flash memory **324** can be segregated into different areas for both computer programs **358** and program data storage **350**, **352**, **354** and **356**. These different storage types indicate that each program can allocate a portion of flash memory **324** for their own data storage requirements. Processor **338**, in addition to its operating system functions, may enable execution of software applications on the mobile device. A predetermined set of applications that control basic operations, including at least data and voice communication applications for example, will normally be installed on mobile device **300** during manufacturing. Other applications could be installed subsequently or dynamically.

Applications and software, such as DNS client **154**, VPN client **130**, DNS client manager **152** and VPN client manager **150**, among others, may be stored on any computer readable storage medium. The computer readable storage medium may be a tangible or intransitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **319**. In one embodiment, the PIM data items are seamlessly integrated, synchronized and updated, via the wireless network **319**, with the mobile device user's corresponding data items stored or associated with a host computer system. Further applications may also be loaded onto the mobile device **300** through the network **319**, an auxiliary I/O subsystem **328**, serial port **330**, short-range communications subsystem **340** or any other suitable subsystem **342**, and installed by a user in the RAM **326** or a non-volatile store (not shown) for execution by the processor **338**. Such flexibility in application installation increases the functionality of the device and may provide enhanced on-device functions, communication-related functions, or both. For example, secure communication applications may enable electronic commerce functions and other such financial transactions to be performed using the mobile device **300**.

In a data communication mode, a received signal such as a text message or web page download will be processed by the communication subsystem **311** and input to the processor **338**, which may further process the received signal for output to the display **322**, or alternatively to an auxiliary I/O device **328**.

A user of mobile device **300** may also compose data items such as email messages for example, using the keyboard **332**, which may be a complete alphanumeric keyboard or telephone-type keypad, among others, in conjunction with the display **322** and possibly an auxiliary I/O device **328**. Such composed items may then be transmitted over a communication network through the communication subsystem **311**.

For voice communications, overall operation of mobile device **300** is similar, except that received signals would typically be output to a speaker **334** and signals for transmission would be generated by a microphone **336**. Alternative voice or audio I/O subsystems, such as a voice message recording subsystem, may also be implemented on mobile device **300**. Although voice or audio signal output is preferably accomplished primarily through the speaker **334**, display **322** may also be used to provide an indication of the identity of a calling party, the duration of a voice call, or other voice call related information for example.

Serial port **330** in **Figure 3** would normally be implemented in a personal digital assistant (PDA)-type mobile device for which synchronization with a user's desktop computer (not shown) may be desirable, but is an optional device component. Such a port **330** would enable a user to set preferences through an external device or software application and would extend the capabilities of mobile device **300** by providing for information or software downloads to mobile device **300** other than through a wireless communication network. The alternate download path may for example be used to load an encryption key onto the device through a direct and thus reliable and trusted connection to thereby enable secure device communication. As will be appreciated by those skilled in the art, serial port **330** can further be used to connect the mobile device to a computer to act as a modem.

Other communications subsystems **340**, such as a short-range communications subsystem, is a further optional component which may provide for communication between mobile device **300** and different systems or devices, which need not necessarily be similar devices. For example, the subsystem **340** may include an infrared device and associated circuits and components or a Bluetooth™ communication module to provide for communication with similarly enabled systems and devices. Other communications subsystems **340** may also include WiFi^{™} or WiMAX^{™} communications circuits for communicating with an access point (not shown)

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a mobile device (110) comprising:
upon expiration of a timer, sending, over a Virtual Private Network, VPN, tunnel, a request to a server located behind a terminator (140) of the VPN;
checking whether a response to the request is received within a time interval;
if the response to the request is received, resetting the timer; and
if the response to the request is not received within the time interval,
determining if a request count is less than a set number of maximum requests,
resending the request if a request count is less than the set number of maximum requests; and
providing an inactive tunnel indication to a VPN client manager if the request count equals the set number of maximum requests;
wherein the timer is reset when network traffic is received at the mobile device over the VPN tunnel such that the timer only progresses when the VPN tunnel goes into an idle state.

2. The method of claim 1, wherein the server is a domain name server (156) and the request is a domain name server PTR request.

3. The method of claim 2, wherein the request utilizes a domain name server client component (154) of the mobile device.

4. The method of claim 3, wherein the domain name server client component (154) includes application program interfaces for handling the request and response.

5. The method of any one of claims 1 to 4, wherein the time interval is increased upon resending the request.

6. The method of claim 5, wherein the request count is four, and the time interval is two seconds for a first request, two seconds for a second request, four seconds for a third request and eight seconds for a fourth request.

7. The method of any one of claims 1 to 6, wherein the timer expires if the VPN tunnel is in an idle state and no network traffic occurs for a preset duration.

8. The method of claim 7, wherein the timer is reset if a relay client protocol ping timer expires.

9. The method of any one of claims 1 to 8, wherein the sending of the request to the server only occurs if dead peer detection liveness checking is unavailable.

10. The method of claim 9, wherein the mobile device sets a flag indicating whether dead peer detection liveness checking is available on establishment of the VPN.

11. The method of any one of claims 1 to 10, wherein the VPN client manager initiates tunnel take down or re-establishment procedures upon receipt of the inactive tunnel indication.

12. A mobile device (110) configured for virtual private network, VPN, liveness checking comprising:
a processor; and
a communications subsystem,
wherein the processor and communications subsystem cooperate to perform the method of any one of claims 1 to 11.

13. A computer program which when executed on a mobile device (110) is configured to perform the method of any one of claims 1 to 11.

## Patentansprüche

1. Ein Verfahren an einer mobilen Vorrichtung (110), das aufweist:
bei Ablauf eines Timers, Senden einer Anforderung über einen VPN(Virtual Private Network)-Tunnel an einen Server, der sich hinter einem Terminator (140) des VPNs befindet;
Prüfen, ob eine Antwort auf die Anforderung innerhalb eines Zeitintervalls empfangen wird;
wenn die Antwort auf die Anforderung empfangen wird, Zurücksetzen des Timers; und
wenn die Antwort auf die Anforderung nicht innerhalb des Zeitintervalls empfangen wird,
Bestimmen, ob eine Anforderungsanzahl geringer ist als eine gesetzte Anzahl von maximalen Anforderungen, erneutes Senden der Anforderung, wenn eine Anforderungsanzahl geringer ist als eine gesetzte Anzahl von Anforderungen; und
Vorsehen einer "inaktiver Tunnel"-Angabe an einen VPN-Client-Manager, wenn die Anforderungsanzahl gleich der gesetzten Anzahl von Anforderungen ist;
wobei der Timer zurückgesetzt wird, wenn Netzwerkverkehr an der mobilen Vorrichtung über den VPN-Tunnel empfangen wird, derart, dass der Timer nur fortschreitet, wenn der VPN-Tunnel in einen inaktiven Zustand geht.

2. Das Verfahren gemäß Anspruch 1, wobei der Server ein Domain-Name-Server (156) ist und die Anforderung eine Domain-Name-Server-PTR-Anforderung ist.

3. Das Verfahren gemäß Anspruch 2, wobei die Anforderung eine Domain-Name-Server-Client-Komponente (154) der mobilen Vorrichtung verwendet.

4. Das Verfahren gemäß Anspruch 3, wobei die Domain-Name-Server-Client-Komponente (154) Anwendungsprogrammschnittstellen zur Handhabung der Anforderung und der Antwort umfasst.

5. Das Verfahren gemäß einem der Ansprüche 1 bis 4, wobei das Zeitintervall bei einem erneuten Senden der Anforderung vergrößert wird.

6. Das Verfahren gemäß Anspruch 5, wobei die Anforderungsanzahl vier ist und das Zeitintervall zwei Sekunden für eine erste Anforderung, zwei Sekunden für eine zweite Anforderung, vier Sekunden für eine dritte Anforderung und acht Sekunden für eine vierte Anforderung ist.

7. Das Verfahren gemäß einem der Ansprüche 1 bis 6, wobei der Timer abläuft, wenn der VPN-Tunnel in einem inaktiven Zustand ist und kein Verkehr für eine vorgegebene Dauer stattfindet.

8. Das Verfahren gemäß Anspruch 7, wobei der Timer zurückgesetzt wird, wenn ein Relais-Client-Protokoll-Ping-Timer abläuft.

9. Das Verfahren gemäß einem der Ansprüche 1 bis 8, wobei das Senden der Anforderung an den Server nur stattfindet, wenn eine "Dead Peer Detection"-Lebendigkeitsprüfung nicht verfügbar ist.

10. Das Verfahren gemäß Anspruch 9, wobei die mobile Vorrichtung ein Flag setzt, das angibt, ob eine "Dead Peer Detection"-Lebendigkeitsprüfung verfügbar ist bei Einrichtung des VPNs.

11. Das Verfahren gemäß einem der Ansprüche 1 bis 10, wobei der VPN-Client-Manager "Tunnel entfernen oder wiederherstellen"-Verfahren bei Empfang der "inaktiver Tunnel"-Angabe initiiert.

12. Eine mobile Vorrichtung (110), die für eine VPN(virtual private network)-Lebendigkeitsprüfung konfiguriert ist, die aufweist:
einen Prozessor; und
ein Kommunikationsteilsystem,
wobei der Prozessor und das Kommunikationsteilsystem zusammenarbeiten zur Durchführung des Verfahrens gemäß einem der Ansprüche 1 bis 11.

13. Ein Computerprogramm, das bei Ausführung auf einer mobilen Vorrichtung (110) konfiguriert ist zum Durchführen des Verfahrens gemäß einem der Ansprüche 1 bis 11.

## Revendications

1. Procédé au niveau d'un dispositif mobile (110) comprenant le fait :
d'envoyer, lors de l'expiration d'un temporisateur, sur un tunnel de réseau privé virtuel, VPN, une demande à un serveur situé derrière un terminateur (140) du VPN ;
de vérifier si une réponse à la demande est reçue dans un intervalle de temps ;
si la réponse à la demande est reçue, de réinitialiser le temporisateur ; et
si la réponse à la demande n'est pas reçue dans l'intervalle de temps, de déterminer si un total de demandes est inférieur à un nombre défini de demandes maximales,
de renvoyer la demande si un total de demandes est inférieur au nombre défini de demandes maximales ; et
de fournir une indication de tunnel inactif à un gestionnaire de clients VPN, si le total de demandes est égal au nombre défini de demandes maximales ;
dans lequel le temporisateur est réinitialisé lorsqu'un trafic de réseau est reçu au niveau du dispositif mobile sur le tunnel VPN de sorte que le temporisateur ne progresse que lorsque le tunnel VPN entre dans un état de repos.

2. Procédé de la revendication 1, dans lequel le serveur est un serveur de noms de domaine (156) et la demande est une demande PTR de serveur de noms de domaine.

3. Procédé de la revendication 2, dans lequel la demande utilise un composant client de serveur de noms de domaine (154) du dispositif mobile.

4. Procédé de la revendication 3, dans lequel le composant client de serveur de noms de domaine (154) comporte des interfaces de programme d'application pour traiter la demande et la réponse.

5. Procédé de l'une quelconque des revendications 1 à 4, dans lequel l'intervalle de temps augmente lors du renvoi de la demande.

6. Procédé de la revendication 5, dans lequel le total de demandes est de quatre, et l'intervalle de temps est de deux secondes pour une première demande, de deux secondes pour une deuxième demande, de quatre secondes pour une troisième demande et de huit secondes pour une quatrième demande.

7. Procédé de l'une quelconque des revendications 1 à 6, dans lequel le temporisateur expire si le tunnel VPN est dans un état de repos et aucun trafic de réseau ne se produit pendant une durée prédéfinie.

8. Procédé de la revendication 7, dans lequel le temporisateur est réinitialisé si un temporisateur de ping de protocole client relais expire.

9. Procédé de l'une quelconque des revendications 1 à 8, dans lequel l'envoi de la demande au serveur ne se produit que si une vérification de vivacité par détection des homologues non fonctionnels n'est pas disponible.

10. Procédé de la revendication 9, dans lequel le dispositif mobile place un drapeau indiquant si une vérification de vivacité par détection des homologues non fonctionnels est disponible lors de l'établissement du VPN.

11. Procédé de l'une quelconque des revendications 1 à 10, dans lequel le gestionnaire de clients VPN lance des procédures de désactivation ou de rétablissement de tunnel lors de la réception de l'indication de tunnel inactif.

12. Dispositif mobile (110) configuré pour la vérification de vivacité de réseau privé virtuel, VPN, comprenant :
un processeur ; et
un sous-système de communication,
dans lequel le processeur et le sous-système de communication coopèrent pour effectuer le procédé de l'une quelconque des revendications 1 à 11.

13. Programme informatique qui, lorsqu'il est exécuté sur un dispositif mobile (110), est configuré pour effectuer le procédé de l'une quelconque des revendications 1 à 11.
